# EUROPÄISCHE PATENTSCHRIFT

(11) **EP 2 638 209 B1**
(45) Veröffentlichungstag und Bekanntmachung des Hinweises auf die Patenterteilung: **04.03.2015**
(21) Anmeldenummer: 11810541.0
(22) Anmeldetag: 11.11.2011
(51) Int. Cl.: E01B 31/12

(54) **VERFAHREN ZUM PROFILIEREN EINER VERLEGTEN SCHIENE UND BEARBEITUNGSFAHRZEUG**
METHOD FOR PROFILING A LAID RAIL AND PROCESSING VEHICLE
PROCÉDÉ POUR PROFILER UN RAIL POSÉ ET VÉHICULE DE TRAVAIL

(30) Priorität: 11.11.2010 AT 18542010
(43) Veröffentlichungstag der Anmeldung: 18.09.2013
(73) Patentinhaber: Linsinger Maschinenbau Gesellschaft m.b.H., 4662 Steyrermühl (AT)
(72) Erfinder: KNOLL, Johann, A-4861 Schörfling (AT)
(74) Vertreter: Burger, Hannes
(86) Internationale Anmeldenummer: PCT/AT2011/050028
(87) Internationale Veröffentlichungsnummer: WO 2012/061864

(56) Entgegenhaltungen:
- EP-A1- 0 552 473
- DE-A1-102005 044 786
- GB-A- 2 056 345

## Beschreibung

Die Erfindung betrifft ein Verfahren gemäß Patentanspruch 1 sowie ein schienengeführtes Bearbeitungsfahrzeug gemäß Patentanspruch 9.

In einem Gleis verlegte Schienen unterliegen naturgemäß einem Verschleiß, der hauptsächlich durch die zwischen den Schienen und den Rädern der darauf bewegten Schienenfahrzeuge wirkenden Kontaktkräfte bewirkt wird. Die dabei auftretenden, unerwünschten Veränderungen des Schienenquerschnitts werden zur Verlängerung der Lebensdauer regelmäßig oder anlassbezogen einem Verfahren zum Reprofilieren unterzogen. Das Reprofilieren erfolgt dabei vorwiegend mit spanabhebenden Bearbeitungsverfahren wie etwa Schleifen, Hobeln oder Fräsen, wobei diese Bearbeitungsverfahren entweder an ausgebauten Schienen ausgerührt werden oder mittels schienengeführten Bearbeitungsfahrzeugen im verlegten Gleis erfolgen können.

Ein Verfahren zum Reprofilieren einer Schiene ist beispielsweise aus WO 02/06587 A1 bekannt. Darin ist ein gleisgeführtes Bearbeitungsfahrzeug offenbart, mit dem die Lauffläche einer Schiene, die im Wesentlichen die Fahrfläche und die Fahrkante umfasst, mittels Umfangsfräsen und erforderlichenfalls mittels eines Schleifvorganges wieder an das Sollprofil herangeführt oder angenähert wird. Mit einem derartiges Verfahren und einem derartigen Bearbeitungsfahrzeug kann in kurzer Zeit auf rationelle Weise das Sollprofil von Schienen wieder hergestellt werden, deren Einsatz ist jedoch bisher nur auf durchgehenden Gleisabschnitten möglich gewesen, während an Gleisabschnitten mit Unterbrechungen der Schienen, wie zum Beispiel im Bereich von Weichen und Kreuzungen das Reprofilieren vielfach mit handgerührten Bearbeitungswerkzeugen oder kleineren Spezialvorrichtungen erfolgt, wodurch das Reprofilieren von Gleisen im Bereich von Weichen oder Kreuzungen aufgrund eines hohen manuellen Arbeitsanteiles nach wie vor längere Sperrzeiten und dadurch länger andauernde Behinderungen des Schienenverkehrs mit entsprechend hohen Folgekosten verursachen.

GB-A-2056345 wird als nächstliegender Stand der Technik angesehen und offenbart ein gattungsgemäßes Verfahren sowie Bearbeitungsfahrzeug.

Die Aufgabe der Erfindung besteht darin, ein Verfahren zum Reprofilieren bzw. ein Bearbeitungsfahrzeug bereitzustellen, mit dem auch im Bereich von Weichen oder Gleiskreuzungen ein rationelles und definiertes Reprofilieren innerhalb kurzer Zeit möglich ist

Die Aufgabe der Erfindung wird durch ein Verfahren mit den Merkmalen des Anspruches 1 gelöst Durch die erfindungsgemäße Verwendung eines zusätzlichen, zweiten Kopiertastelements bzw. die Verstellmöglichkeit des ersten Kopiertastelements und eine Maximalbreite von 35 mm für die ersten und zweiten Kopiertastelemente kann ein gattungsgemäßes Bearbeitungsfahrzeug einen Großteil der Schienenabschnitte bei Weichen oder Kreuzungen bearbeiten, wodurch der Anteil an manueller und/oder zeitintensiver maschineller Bearbeitung zum Reprofilieren von Schienen in derartigen Gleisabschnitten wesentlich reduziert werden kann. Durch das zweite Kopiertastelement bzw. die Verstellbarkeit des ersten Kopiertastelements können auch in Schienenabschnitten, in denen ein aus dem Stand der Technik bekanntes lediglich mit einem ersten Kopiertastelement versehenes Bearbeitungsfahrzeug die Bearbeitung nicht fortsetzen kann, die Lauffläche ebenfalls reprofiliert werden, da dadurch die nötige Führung und genaue Positionierung des Bearbeitungswerkzeuges bzw. des Bearbeitungsaggregats auch hier gegeben ist. Es erfolgt somit gewissermaßen ein Wechsel der Bezugskante auf eine besser geeignete Bezugskante, wodurch trotz Unterbrechungen in der ersten Bezugskante der Bearbeitungsvorgang fortgesetzt werden kann.

Eine Verfahrensdurchführung gemäß Anspruch 2 kann vorteilhaft sein, wenn in bestimmten Teilabschnitten des Gleises bzw. der Schienen andere Bearbeitungsmethoden zum Reprofilieren besser geeignet sind, wie beispielsweise im unmittelbaren Bereich eines Herzstückes oder ähnlichem, oder wenn beispielsweise vor einer spanenden Bearbeitung Auftragsschweißungen durchgeführt werden müssen. Da die Bearbeitungswerkzeuge für Überstellungsfahrten ohnehin außer Eingriff mit den Schienen verstellbar sein müssen, sind dazu keine zusätzlichen baulichen Vorkehrungen erforderlich.

Von Vorteil ist auch eine Durchführung des Verfahrens gemäß Anspruch 3, da im Bereich einer Backenschiene die Antastung mittels des ersten Kopiertastelements an der Innenseite der zu bearbeitenden Schiene nicht die nötige Bearbeitungsgenauigkeit bringen würde, da an der Backenschiene die Fahrkante eine Ausnehmung zur Aufnahme der Weichenzunge aufweist.

Weiters kann durch die Möglichkeit einer Positionskorrektur in horizontaler Richtung gemäß Anspruch 4 auch eine Bearbeitung von Sonderquerschnitten erfolgen.

Eine Durchführung des Verfahrens gemäß Anspruch 5 kann vorteilhaft dazu dienen, während des Befahrens des Herzstückes einen Bezugswert für die Positionierung des Bearbeitungswerkzeuges beibehalten zu können, wodurch nach dem Herzstück das Bearbeitungswerkzeug sowie das erste Kopiertastelement mit geringerem Einstellaufwand wieder in die Eingriffsposition an der Schiene verbracht werden kann. Die Außenseite der dazu parallelen Schiene ist dazu deshalb auch gut als Bezugskante geeignet, da diese nur einem zu vernachlässigendem Verschleiß unterliegt.

Bei einer Durchführung des Verfahrens gemäß Anspruch 6 ist von Vorteil, dass dadurch auch die verstellbaren Weichenzungen im Zuge einer Arbeitsfahrt reprofiliert werden können. Eine solcherart angehobene Weichenzunge wird nach dem Reprofilieren vorzugsweise wieder auf das das ursprüngliche Niveau abgesenkt, es ist jedoch auch möglich, dass das Absenken nach der Bearbeitung nur teilweise erfolgt.

Eine hohe Abtragleistung und dadurch eine kurze Bearbeitungszeit werden bei einer Durchführung des Verfahrens gemäß Anspruch 7 erzielt.

Durch die Ausführung des Verfahrens gemäß Anspruch 8 kann eine hohe Genauigkeit des fertig bearbeiteten Profils erzielt werden, die insbesondere bei höheren Anforderungen an Laufruhe von Vorteil ist. Weiters kann der Schleifvorgang gemäß Anspruch 8 auch einem Reprofiliervorgang gemäß Anspruch 7 nachgeordnet sein, und insbesondere auch in ein und derselben Arbeitsfahrt mit einem Bearbeitungsfahrzeug durchgeführt werden, wodurch wiederum die Bearbeitungszeit zum Reprofilieren eines Gleisstranges auch im Bereich von Weichen und Gleiskreuzungen reduziert werden kann.

Die Aufgabe der Erfindung wird auch durch ein schienengeführtes Bearbeitungsfahrzeug gemäß Anspruch 9 gelöst, wobei ein derartiges Bearbeitungsfahrzeug zur Durchführung des erfindungsgemäßen Verfahrens zum Reprofilieren geeignet ist und daher auch für die rationelle Bearbeitung von Schienenoberflächen oder Schiencnlaufflächen im Bereich von Weichen und Gleiskreuzungen einsetzbar ist.

Eine Ausführung gemäß Anspruch 10 ist für das Bearbeitungsfahrzeug von Vorteil, da bei Überstellungsfahrten oder bei vom Normalprofil abweichenden Gleisen dadurch Kollisionen der Kopiertastelemente mit feststehenden Hindernissen vermieden werden können. Die Distanz zur Schiene beträgt dabei vorzugsweise zumindest 100 mm, vorzugsweise in vertikaler Richtung.

Die Ausführung des Bearbeitungsfahrzeuges gemäß Anspruch 11 ermöglicht ein spanabhebendes Reprofilieren von Schienen durch Fräsen, wobei mit einem Fräsvorgang im Vergleich zu einem Schleifvorgang eine relativ große Spandicke abgenommen werden kann und dadurch auf ein mehrfaches Schleifen und Befahren desselben Schienenabschnittes verzichtet werden kann. Die Ausführung des Fräswerkzeuges als Umfangsfräser ermöglicht dabei besonders hohe Abtragleistungen und kann der Umfangsfräser beispielsweise mit Wendeschneidplatten ausgestattet werden, die auf einfache Weise ausgewechselt werden können.

Zur Erzielung von hohen Genauigkeiten des fertig bearbeiteten Schienenprofils ist es von Vorteil, wenn das Bearbeitungsfahrzeug gemäß Anspruch 12 ein Bearbeitungswerkzeug in Form eines Schleifwerkzeuges umfasst, wobei eine Ausführung als Umfangschleifscheibe ebenfalls eine hohe Abtragleistung ermöglicht.

Das Schleifwerkzeug bzw. das zugehörige Bearbeitungsaggregat kann gemäß Anspruch 13 dabei zusätzlich zu einem Fräswerkzeug mit dem zugehörigen Bearbeitungsaggregat vorgesehen sein und ist in diesem Fall in Arbeitsrichtung des Bearbeitungsfahrzeuges gesehen nach dem Fräswerkzeug angeordnet und beseitigt allfällige nach dem Fräsvorgang noch bestehende Profilabweichungen wie zum Beispiel eine Welligkeit, die durch die begrenzte Schneidenanzahl eines Fräswerkzeuges entsteht. Die in Fahrtrichtung hintereinander angeordneten Bearbeitungsaggregate umfassen dabei jeweils ein zuvor beschriebenes Kopiertastelement, dessen Antastposition verändert bzw. gewechselt werden kann oder ein zweites Kopiertastelement durch das die Antastposition geändert werden kann.

Ergänzend zu einem Fräswerkzeug und/oder einem Schleifwerkzeug kann gemäß Anspruch 14 ein Bearbeitungsaggregat ein Bearbeitungswerkzeug in Form einer Fächerschleifscheibe umfassen, das eine weitere Verbesserung der Oberflächenqualität der reprofilierten Schiene ermöglicht, da diese eine höhere Flexibilität als eine starre Schleifscheibe aufweist und dadurch eine weiter verbesserte Oberflächengüte erreicht werden kann.

Zur Verbesserung der Arbeitsleistung eines erfindungsgemäßen Bearbeitungsfahrzeuges können gemäß Anspruch 15 Bearbeitungswerkzeuge beidseits einer vertikalen Längsmittelebene des Bearbeitungsfahrzeuges angeordnet und gleichzeitig in Eingriff mit beiden Schienen eines Gleisstranges bringbar sein. So können in einer Arbeitsfahrt beide Schienen auch im Bereich einer Weiche oder einer Gleiskreuzung fertig reprofiliert werden.

Die Bearbeitungsaggregate sind vorzugsweise gemäß Anspruch 16 mittels CNC gesteuerten Achsen verstellbar, wodurch eine genaue Positionierung der Bearbeitungswerkzeuge erleichtert wird. Die Achsen umfassen dazu geeignete Verstellantriebe, wie beispielsweise ServoMotoren. Die Verstellbarkeit ist durch geeignete Führungen zumindest in Vertikalrichtung gegeben, um die Bearbeitungswerkzeuge in Eingriff bzw. außer Eingriff mit einer Schiene bringen zu können, es kann jedoch auch eine zusätzliche Verstellbarkeit in horizontaler Reichtung quer zur Schienenlängsrichtung verwirklicht sein, wobei dann eine steuerungstechnische Kopplung zwischen Kopiertastelement und Bearbeitungswerkzeug gegeben ist. Vorzugsweise ist die horizontale Verstellbarkeit durch eine horizontale Führung und eine mechanische Kopplung des Bearbeitungsaggregats an das jeweilige Kopiertastelement verwirklicht.

Eine Ausführung gemäß Anspruch 17 ist von Vorteil, da das Bearbeitungsfahrzeug durch den eigenen Fahrantrieb nicht auf ein Zugfahrzeug angewiesen ist und dadurch universeller einsetzbar ist

Die Erfindung umfasst weiters die Verwendung des erfindungsgemäßen Verfahrens bzw. des erfindungsgemäßen Bearbeitungsfahrzeuges zum Reprofilieren von verlegten Schienen innerhalb einer Weiche oder einer Gleiskreuzung, wobei insbesondere Schienenabschnitte ausgewählt aus einer Gruppe umfassend Backenschienen, Weichenzungen, Zwischenschienen, Anschlussschienen und durchlaufenden Radlenkerschienen rationell bearbeitet werden können. Zum besseren Verständnis der Erfindung wird diese anhand der nachfolgenden Figuren näher erläutert.

Es zeigen jeweils in stark schematisch vereinfachter Darstellung:
- Fig. 1: einen Querschnitt durch einen Schienenkopf;
- Fig. 2: eine Draufsicht auf eine einfache Weiche mit bearbeitbaren Schienenabschnitten;
- Fig. 3: eine Draufsicht auf eine Gleiskreuzung mit bearbeitbaren Schienenabschnitten;
- Fig. 4: eine Draufsicht auf ein erfindungsgemäßes Bearbeitungsfahrzeug beim Reprofilieren innerhalb einer Weiche;
- Fig. 5: das Reprofilieren mit Innenkopieren mittels eines ersten Kopiertastelements;
- Fig. 6: das Reprofilieren mit Außenkopieren mittels eines zweiten Kopiertastelements;
- Fig. 7: das Reprofilieren mit Außenkopieren mittels eines verstellten ersten Kopiertastelements;
- Fig. 8: das Reprofilieren mit Außenkopieren mittels eines zweiten Kopiertastelements an der parallelen Schiene;
- Fig. 9: das Reprofilieren im Bereich einer Weichenzunge.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

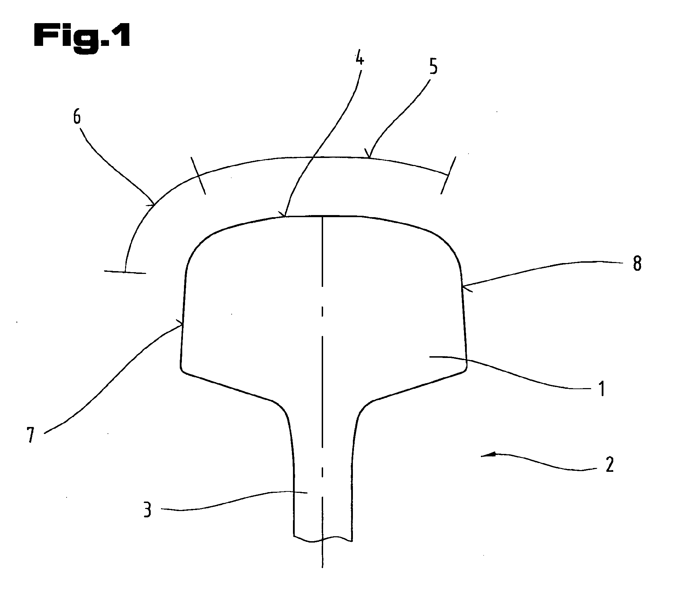

Fig. 1 zeigt im Querschnitt das Profil eines Schienenkopfes 1 einer Schiene 2, wobei der Schienenkopf 1 von einem Schienensteg 3 getragen wird und mittels eines nicht dargestellten Schienenfußes an einer Schwelle oder sonstigem Auflager bzw. Untergrund befestigt ist. Der Teil des Schienenkopfes 1, der von Rädern eines Schienenfahrzeuges berührt werden kann, wird in diesem Zusammenhang als Lauffläche 4 bezeichnet, die sich im Allgemeinen aus der Fahrfläche 5 an der Oberseite des Schienenkopfes 1 und aus der Fahrkante 6, die den Übergang zur inneren Seitenfläche 7, die der Gleismitte zugewandt ist, darstellt, zusammensetzt. An der Lauffläche 4 von verlegten Schienen 2 entstehen mit der Zeit Schäden, wie beispielsweise Korrosion, Verschleiß, Risse, Fahrflächenfehler wie Riffel, Wellen, Radschleuderstellen, Grübchenbildung, Querprofilveränderungen wie Abflachungen der bombierten Fahrfläche, Grate, Wülste, usw. Schäden die sich im Wesentlichen auf den äußersten Bereich der Lauffläche 4 beschränken, können durch Reprofilieren der Schiene 2 großteils beseitigt werden, wobei durch ein spanabhebendes Bearbeitungsverfahren das verschlissene bzw. beschädigte Schienenprofil an der Oberfläche der Schiene 2 entfernt und der bearbeitete Schienenkopf 1 soweit als möglich an ein Sollprofil angenähert wird.

Das erfindungsgemäße Verfahren betrifft das Profilieren oder Reprofilieren der Lauffläche 4, wobei sich die spanende Bearbeitung auch über die Fahrkante 6 hinaus über die innere Seitenfläche 7 hin erstrecken kann, und eventuell auch über die Fahrfläche 5 hinaus über die äußere Seitenfläche 8 erstrecken kann.

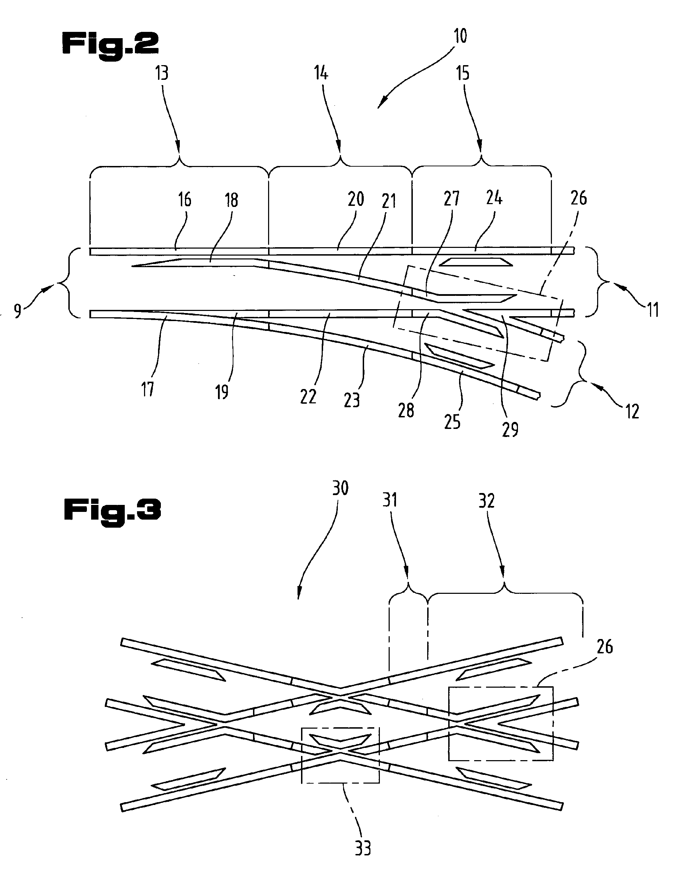

Fig. 2 zeigt eine vereinfachte Draufsicht auf ein Gleis 9 mit einer Weiche 10, mit einem geradlinig durch die Weiche 10 führenden Stammgleis 11 und einem rechts abzweigenden Zweiggleis 12. Die Weiche 10 umfasst dabei den Zungenbereich 13, den Zwischenschienenbereich 14 und den Herzstückbereich 15. Mit dem erfindungsgemäßen Verfahren bzw. einem erfindungsgemäßen Bearbeitungsfahrzeug ist es möglich, die folgenden Einzelteile bzw. Schienenabschnitte der Weiche 10 zu profilieren bzw. zu reprofilieren: gerade linke Backenschiene 16, gebogene rechte Backenschiene 17, gebogene linke Zunge 18, gerade rechte Zunge 19, gerade linke Zwischenschiene 20, gebogene linke Zwischenschiene 21, gerade rechte Zwischenschiene 22, gebogene rechte Zwischenschiene 23, gerade linke Radlenkerschiene 24, gebogene rechte Radlenkerschiene 25. Nicht bearbeitet wird der unmittelbare Bereich des Herzstückes 26, also die linke Flügelschiene 27, die rechte Flügelschiene 28 sowie die Herzstückspitze 29.

Bei einer Linksausführung einer Weiche 10 sind die angeführten Schienenabschnitte spiegelbildlich angeordnet und können ebenso mit dem erfindungsgemäßen Verfahren reprofiliert werden.

In Fig. 3 ist eine vereinfachte Draufsicht auf eine Gleiskreuzung 30 dargestellt, die ähnliche Bestandteile aufweist wie eine Weiche 10 und an der mittels des erfindungsgemäßen Verfahrens bzw. eines erfindungsgemäßen Bearbeitungsfahrzeugs folgende Schienenabschnitte bzw. Einzelteile reprofiliert werden können: die Schienenabschnitte im Zwischenschienenbereich 31 sowie die äußeren durchlaufenden Radlenkerschienen im Herzstückbereich 32. Nicht bearbeitet werden hier die Flügelschienen und die Herzstückspitze im Herzstückbereich 32 sowie der unmittelbare Bereich des doppelten Herzstückes 33 mit den Knieschienen und zugehörigen Radlenkern.

Auf die Funktion der aufgezählten Schienenabschnitte und Einzelteile bzw. deren Zusammenwirken mit den Rädern eines Schienenfahrzeugs wird an dieser Stelle nicht eingegangen, da diese dem Fachmann geläufig sind.

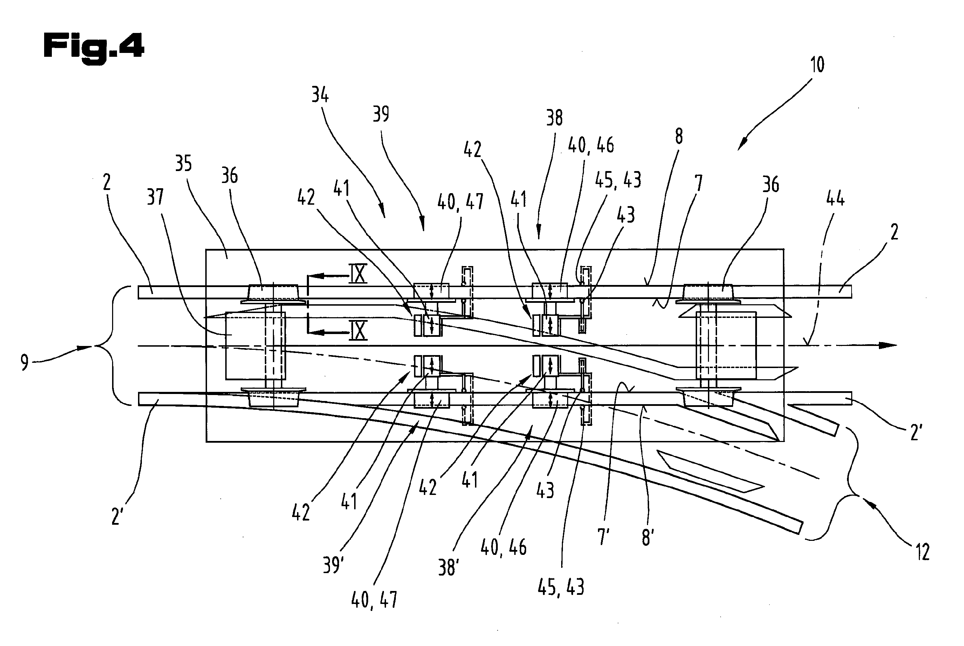

Fig. 4 zeigt in schematisch vereinfachter Draufsicht ein Bearbeitungsfahrzeug 34 bei der Ausführung des erfindungsgemäßen Verfahrens zum Profilieren bzw. Reprofilieren der Schienenstränge innerhalb einer Weiche 10. Das Bearbeitungsfahrzeug 34 umfasst einen Fahrzeugrahmen 35 der beispielsweise als Kasten- oder Leiterrahmen oder in anderer Form ausgebildet sein kann. Der Fahrzeugrahmen 35 wird beispielhaft von zwei Radsätzen 36 auf den Schienen 2 und 2' abgestützt, es sind jedoch selbstverständlich auch mehr als zwei Radsätze 36 möglich und können diese auch in gegenüber dem Fahrzeugrahmen 35 beweglichen Drehgestellen gelagert sein. Durch einen optionalen Antriebsmotor 37 der auf zumindest einen Radsatz 36 wirkt, kann das Bearbeitungsfahrzeug 34 auch selbstfahrend ausgeführt sein.

Zur Bearbeitung der Schienen 2, 2' umfasst das Bearbeitungsfahrzeug 34 zumindest ein Bearbeitungsaggregat 38, wobei im dargestellten Ausführungsbeispiel drei weitere Bearbeitungsaggregate 38', 39 und 39' dargestellt sind, und dabei vorzugsweise den Schienen 2 und 2' in Fahrtrichtung hintereinander angeordnete Bearbeitungsaggregate 38, 39 bzw. 38', 39' zugeordnet sind.

Jedes Bearbeitungsaggregat 38, 38', 39, 39' umfasst ein spanabhebendes Bearbeitungswerkzeug 40, das in Eingriff mit der zu bearbeitenden Schiene 2, 2' bringbar ist und mit einer rotierend antreibenden Antriebsvorrichtung 41, vorzugsweise in Form eines Antriebsmotors verbunden ist. Das Bearbeitungswerkzeug kann dabei eine Zerspanung mit geometrisch bestimmten Schneiden oder geometrisch unbestimmten Schneiden ausführen. Weiters ist das Bearbeitungswerkzeug 40 bzw. das gesamte Bearbeitungsaggregat 38, 39, 38', 39'mittels einer Verstellanordnung 42 relativ zum Fahrzeugrahmen 35 verstellbar, wodurch das Bearbeitungswerkzeug 40 auch relativ zu der zu bearbeitenden Schiene 2, 2' verstellbar ist und dadurch das vom Bearbeitungswerkzeug 40 erzeugte Profil der bearbeiteten Oberfläche der Schiene 2 in seiner Position zum Schienenquerschnitt in vertikaler und horizontaler Richtung relativ zur Schienenlängsrichtung festgelegt wird.

Die Verstellanordnung umfasst dabei Führungen, die eine Verstellbarkeit des Bearbeitungswerkzeuges 40 zumindest in horizontaler Richtung quer zur Schienenlängsrichtung erlauben und ist zur exakten Positionierung des Bearbeitungswerkzeuges 40 dieses mit einem ersten Kontaktelement 43 gekoppelt, das an die Fahrkante 6 bzw. die innere Seitenfläche 7 der zu bearbeitenden Schiene 2 angetastet werden kann. Beim Reprofilieren des Schienenprofils durch spanende Bearbeitung mittels des Bearbeitungswerkzeuges 40 wird das Bearbeitungsfahrzeug 34 entlang des Gleises 9 bewegt, wobei das erste Kontaktelement 43 entlang der Fahrkante 6 bzw. der inneren Seitenfläche 7 geführt ist und dadurch auch die horizontale Position des damit gekoppelten Bearbeitungswerkzeuges 40 vorgegeben wird. Dieses Verwenden der Fahrkante 6 und/oder der inneren Seitenfläche 7 als Referenzfläche für die Positionierung des Bearbeitungswerkzeuges 40 wird auch als Innenkopieren bezeichnet, das an sich aus dem Stand der Technik bereits bekannt ist.

Das Bearbeitungswerkzeug 40 bzw. das gesamte Bearbeitungsaggregat 38, 39 ist mittels der Verstellanordnung zusätzlich auch in vertikaler Richtung verstellbar, wodurch das Bearbeitungswerkzeug 40 in Eingriff bzw. außer Eingriff mit der Schiene 2 gebracht werden kann. Analog zur horizontalen Positionierung des Bearbeitungswerkzeuges 40 kann auch die vertikale Positionierung mittels Kopiertastelementen erfolgen, die jedoch in Fig. 4 nicht dargestellt sind. Das erste Kopiertastelement 43 ist mit dem zugehörigen Bearbeitungswerkzeug 40 entweder mechanisch gekoppelt, beispielsweise indem das Kopiertastelement 43 auf einem an dem Bearbeitungsaggregat 39 fest angebrachten Auslegerarm angeordnet ist und das in horizontaler Richtung quer zur Längsrichtung der Schiene 2 verschiebliche Bearbeitungsaggregat 39 in Richtung zur inneren Seitenfläche 7 der Schiene gedrückt wird, bis das erste Kopiertastelement 43 an der Fahrkante 6 bzw. der inneren Seitenfläche 7 der zu bearbeitenden Schiene 2 anliegt. Verändert sich beispielsweise bei einer gekrümmten Schiene 2 deren Abstand zur Längsmittelebene 44, wird das Bearbeitungswerkzeug 40 in gleichem Maße in horizontaler Richtung nachgeführt, wodurch eine gleichmäßige Spanabnahme während der Bearbeitung der Schiene 2 ermöglicht wird.

Alternativ zu der beschriebenen mechanischen Kopplung von Kopiertastelement 43 und Bearbeitungswerkzeug 40 kann auch eine Kopplung mittels einer Positioniersteuerung vorgesehen sein, bei der das Kopiertastelement 43 als Messtaster verwendet wird und das Bearbeitungswerkzeug 40 mittels eines Positionierantriebes entsprechend dem von der horizontal quer zur Schienenlängsrichtung gemessenen Verlauf der Referenzfläche - etwa der inneren Seitenfläche 7 - nachgeführt wird.

Während diese Bearbeitung von Schienensträngen auf herkömmlichen Gleisabschnitten bereits seit längerem erfolgreich durchgeführt wird, konnten die aus dem Stand der Technik bekannten Bearbeitungsfahrzeuge im Bereich von Weichen 10 oder Gleiskreuzungen 30 keine Bearbeitungen durchführen, da die hierin verwendeten Schienen spezielle Querschnittsformen besitzen, wie beispielsweise Backenschienen oder Zungenschienen, die mit den herkömmlichen Kopiertastelementen keine genaue Positionierung des Bearbeitungswerkzeuges 40 ermöglichen.

Erfindungsgemäß kann das Bearbeitungswerkzeug 40 an ein zweites Kopiertastelement 45 gekoppelt werden, das an die äußere Seitenfläche 8 der zu bearbeitenden Schiene 2 angetastet werden kann. Dieses zusätzliche zweite Kopiertastelement 45 ermöglicht, dass in bestimmten Abschnitten der Schiene 2 die Kopiertastfunktion des ersten Kopiertastelements 43 an der inneren Seitenfläche 7 einer Schiene 2 deaktiviert wird und durch ein Abtasten durch das zweite Kopiertastelement 45 an der äußeren Seitenfläche 8 einer Schiene 2 ersetzt wird, was in diesem Zusammenhang als Außenkopieren bezeichnet werden kann.

Der Übergang vom Innenkopieren auf das Außenkopieren erfolgt vorzugsweise nahtlos, das heißt, dass die Kopplung des Bearbeitungswerkzeuges 40 an das innere erste Kopiertastelement 43 erst gelöst wird, wenn die Kopplung an das äußere, zweite Kopiertastelement 45 einsetzt. Dieser Wechsel kann dabei während der Bewegung des Bearbeitungsfahrzeuges 34 jedoch auch während eines kurzzeitigen Stillstandes durchgeführt werden.

Fig. 4 zeigt das Bearbeitungsfahrzeug 34 in einer Position, bei der das erste Bearbeitungsaggregat 38 sich im Bereich der geraden linken Zwischenschiene 20 befindet (siehe Fig. 2) und erfolgt die horizontale Positionierung des Bearbeitungswerkzeugs 40 durch Innenkopieren mittels des ersten Kopiertastelements 43. Im Bereich der Backenschiene 16 (siehe Fig. 2) erfolgt die horizontale Positionierung des Bearbeitungswerkzeuges 40 durch Kopplung an das zweite Kopiertastelement 45, da in diesem Abschnitt der Schiene 2 die Backenschiene 16 an der inneren Seitenfläche 7 eine Ausnehmung zur Aufnahme der Weichenzunge 18 aufweist und daher für das Innenkopieren keine geeignete Referenzfläche darstellt.

Analog dazu wird das rechte Bearbeitungsaggregat 38' im Bereich der gebogenen, rechten Backenschiene 17 (siehe Fig. 2) vorübergehend von Innenkopieren auf Außenkopieren umgestellt.

Bei den beiden hinteren Bearbeitungsaggregaten 39 für die linke Schiene 2 und 39' für die rechte Schiene 2' wird ebenfalls im Bereich der Backenschienen 16 bzw. 17 von Innenkopieren auf Außenkopieren umgestellt.

Bei einem erfindungsgemäßen Bearbeitungsfahrzeug 34 mit zumindest zwei in Fahrtrichtung hintereinander angeordneten Bearbeitungsaggregaten 38, 39 ist das vordere Bearbeitungsaggregat 38 vorzugsweise als Fräsaggregat ausgebildet und das Bearbeitungswerkzeug 40 in diesem Fall als Fräswerkzeug 46 ausgebildet. Ein derartiges Fräswerkzeug 46 kann insbesondere als Umfangsfräser ausgebildet sein, der an seinem äußeren Umfang mit Schneiden versehen ist, die vorteilhafterweise von auswechselbaren Wendeschneidplatten gebildet werden. Ein verwendetes Fräswerkzeug 46 kann das zu erzielende Profil des Schienenkopfes 4 beispielsweise dadurch annähern, dass unter Verwendung von Wendeschneidplatten mit geraden Schneidkanten ein das Soll-Profil annähernder Polygonzug aus geraden Schneidenabschnitten gebildet wird. Zusätzlich oder alternativ können auch Wendeschneidplatten mit gekrümmten Schneiden vorgesehen sein, mit denen insbesondere der Übergang von der Fahrfläche 5 zu den Seitenflächen 7 und 8, speziell die Fahrkante 6 bearbeitet werden. Dadurch kann die Erhaltung und Wartung eines derartigen Fräswerkzeuges 46 im Wesentlichen aus einem kostengünstig und schnell durchführbaren Wechsel von Wendeschneidplatten bestehen.

Die hinteren Bearbeitungsaggregate 39, 39' sind vorzugsweise als Schleifaggregate ausgebildet, welche Bearbeitungswerkzeuge 40 in Form von Schleifwerkzeugen 47 umfassen. Die Schleifwerkzeuge 47 können zusätzlich oder alternativ zu den Fräswerkzeugen 46 aktiviert werden, und wird durch das Schleifen der zu bearbeitenden Schienenabschnitte eine sehr hohe Oberflächengüte erzielt. Insbesondere die Kombination aus Fräsbearbeitung und nachfolgender Schleifbearbeitung ergänzt sich optimal, da durch den Fräsvorgang ein Großteil der Zerspanungsarbeit in einer Bearbeitungsfahrt, also in kurzer Zeit durchgeführt werden kann und in derselben Arbeitsfahrt das an das Sollprofil bereits gut angenäherte gefräste Profil mit einem einzigen Schleifvorgang noch besser an das Soll-Profil angenähert werden kann und gleichzeitig eine sehr hohe Oberflächenqualität der fertig bearbeiteten Schienen 2, 2' auch im Bereich von Weichen 10 und Gleiskreuzungen 30 innerhalb kurzer Zeit erzielt werden kann.

Die Schleifwerkzeuge 47 können, wie in Fig. 4 dargestellt, mit etwa horizontaler Rotationsachse ausgebildet sein. Es kann weiters auch die Verwendung von topfförmigen Schleifwerkzeugen mit etwa vertikaler Rotationsachse vorgesehen sein. Die Schleifwerkzeuge 47 können auch durch Schleifbänder oder Schleifsteine gebildet sein. Bei allen genannten Ausführungsformen von Schleifwerkzeugen 47 können diese so angeordnet sein, dass die Relativbewegung des Schleifwerkzeuges 47 gegenüber der Schienenlängsrichtung um einen kleinen Winkel schräg gestellt erfolgt, wodurch ein günstiges Schleifergebnis erzielt wird.

Bei beiden beschriebenen Varianten der Kopplung zwischen Kopiertastelement 43, 45 und Bearbeitungswerkzeug 40 kann dieses zusätzlich noch relativ zur angetasteten Referenzfläche horizontal und/oder vertikal verstellbar sein, um damit die Spanabnahme beeinflussen bzw. korrigieren zu können.

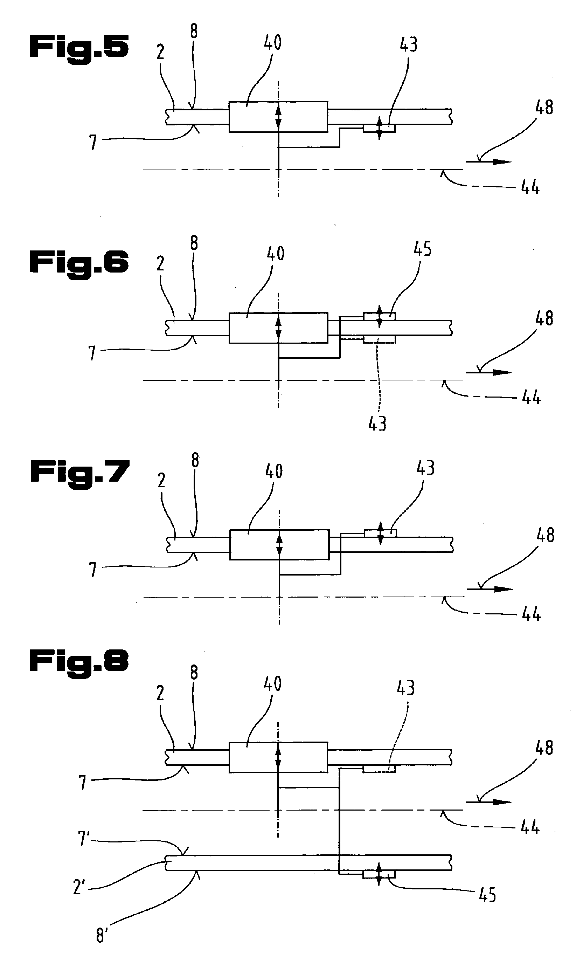

In Fig. 5 ist das aus dem Stand der Technik bekannte Innenkopieren schematisch dargestellt, bei dem ein erstes Kopiertastelement 43 an der inneren Seitenfläche 7 einer zu bearbeitenden Schiene 2 angetastet wird und in horizontaler Richtung quer zur Schienenlängsrichtung mit dem Bearbeitungswerkzeug 40 gekoppelt ist. Der Einfachheit halber ist nur das bezogen auf die Fahrtrichtung 48, die auch als Arbeitsrichtung bezeichnet werden kann und bezogen auf die Längsmittelebene 44 linke Bearbeitungswerkzeug 40 und das damit gekoppelte Kopiertastelement 43 dargestellt. Dieses Innenkopieren kommt bei Schienenabschnitten zum Einsatz, bei denen das normale Schienenprofil vorliegt, also nicht im Bereich von Backenschienen, Zungenschienen und Herzstücken.

Fig. 6 zeigt den erfindungsgemäßen Wechsel von Innenkopieren auf Außenkopieren, indem das Bearbeitungswerkzeug 40 mit einem an der äußeren Seitenfläche 8 angetasteten zweiten Kopiertastelement 45 gekoppelt wird und vom ersten Kopiertastelement 43 entkoppelt wird. Der entkoppelte Zustand ist dabei durch punktierte Linien des entkoppelten Kopiertastelements 43 angedeutet.

Die Kopplung des Bearbeitungswerkzeugs 40 an Kopiertastelemente 43, 45 ist dabei durch identische Doppelpfeile quer zur Schienenlängsrichtung angedeutet.

Dieses Außenkopieren erfolgt in Schienenabschnitten, in denen die innere Seitenfläche 7 bzw. die Fahrkante 6 zur Verwendung als Referenzfläche nicht geeignet ist, beispielsweise im Bereich einer Zungenausnehmung einer Backenschiene 16, 17 (siehe Fig.2).

Fig. 7 zeigt eine alternative Ausführungsform des erfindungsgemäßen Wechsels vom Innenkopieren auf Außenkopieren, bei dem das in Fig. 5 dargestellte erste Kopiertastelement 43, wie in Fig. 7 dargestellt, zur äußeren Seitenfläche 8 der zu bearbeitenden Schiene 2 verstellt und an diese angetastet wird. Für diese Verstellung wird die Kopplung zwischen dem Kopiertastelement 43 und dem Bearbeitungswerkzeug 40 vorübergehend gelöst. Wenn für diesen Wechsel die Bewegung des Bearbeitungsfahrzeuges 34 gestoppt wird, und eine unbeabsichtigte Horizontalverstellung des Bearbeitungswerkzeuges 40 durch geeignet Mittel blockiert wird, kann ein nahtloser Übergang zwischen der inneren Seitenfläche 7 und der äußeren Seitenfläche 8 als Referenzfläche für die horizontale Positionierung des Bearbeitungswerkzeuges 40 erfolgen. Die Anwendung dieser Ausführungsform des Außenkopierens ist ebenfalls, wie in Fig. 6, bei Backenschienen 16, 17 gegeben.

Eine weitere Ausführungsform des erfindungsgemäßen Verfahrens besteht darin, dass gemäß Fig. 8 das Bearbeitungswerkzeug 40 mit einem zweiten Kopiertastelement 45 gekoppelt wird, das an die parallele Schiene 2' angetastet wird, wobei vorzugsweise an deren äußeren Seitenfläche 8' angetastet wird. Das erste Kopiertastelement 43 ist in dieser Phase wieder vom Bearbeitungswerkzeug 40 entkoppelt. Die Entkopplung kann insbesondere auch ein Anheben des Kopiertastelements 43 bzw. 45 umfassen, wodurch Kollisionen mit sonstigen Gleisbestandteilen vermieden werden können.

Alternativ zu der Darstellung in Fig. 8 kann das zweite Kopiertästelement 45 auch an der inneren Seitenfläche 7' der parallelen Schiene 2' angetastet werden, wobei dies auch davon abhängig gemacht werden kann, welche der beiden Seitenflächen 7', 8' als Referenzfläche besser geeignet ist. Im Allgemeinen wird die äußere Seitenfläche 8' der parallelen Schiene 2 besser geeignet sein, da diese einem geringeren Verschleiß unterliegt und weniger Schäden aufweist.

Dieses in Fig. 8 dargestellte Kopieren von der parallelen Schiene 2' wird beim erfindungsgemäßen Bearbeiten von Schienen 2 innerhalb von Weichen 10 oder Gleiskreuzungen 30 dort verwendet, wo sowohl die innere Seitenfläche 7 als auch die äußere Seitenfläche 8 der zu bearbeitenden Schiene 2 nicht für die horizontale Positionierung des Bearbeitungswerkzeuges 40 geeignet ist, beispielsweise im Bereich des Herzstückes 26, 33, da hier die der Schienenstrang Unterbrechungen aufweist und daher keine geeigneten Referenzflächen zur Verfügung stehen. Auch wenn im erfindungsgemäßen Verfahren ein direktes spanendes Bearbeiten des Herzstückes 26 nicht vorgesehen ist, ist in diesem Bereich die horizontale Positionierung des Bearbeitungswerkzeuges 40 von Vorteil, da es unmittelbar nach dem Herzstück 26 bereits in der richtigen Horizontalposition wieder in Eingriff mit der zu bearbeitenden Schiene 2 gebracht werden kann.

Die Führung des Bearbeitungswerkzeuges 40 mittels eines Kopiertastelements 43 bzw. 45 ist erforderlich, da die Bewegung des Bearbeitungsfahrzeuges 34 aufgrund von den erforderlichen Toleranzen in der Spurweite der Schienen 2, 2' sowie des Radabstandes quer zur Schienenlängsrichtung von diesen nicht exakt geführt werden kann, sondern im Allgemeinen der sogenannte Sinus-Lauf vorliegt, der durch die leicht konischen Räder eines Schienenfahrzeuges 34 hervorgerufen wird und eine leicht wellenförmige Schlingerbewegung des Schienenfahrzeuges 34 bewirkt wird.

Im unmittelbaren Bereichs des Herzstückes 26, 33 wird das Bearbeitungswerkzeug 40 von der Verstellanordnung 42 bzw. einem Positionierantrieb, etwa in Form von CNC-Achsen in vertikaler Richtung außer Eingriff mit von der Schiene 2 gebracht und erfolgt im Bereich des Herzstückes 26, 33 keine Bearbeitung, jedoch wird die horizontale Position des Bearbeitungswerkzeuges 40 von der zweiten Schiene 2' vorgegeben.

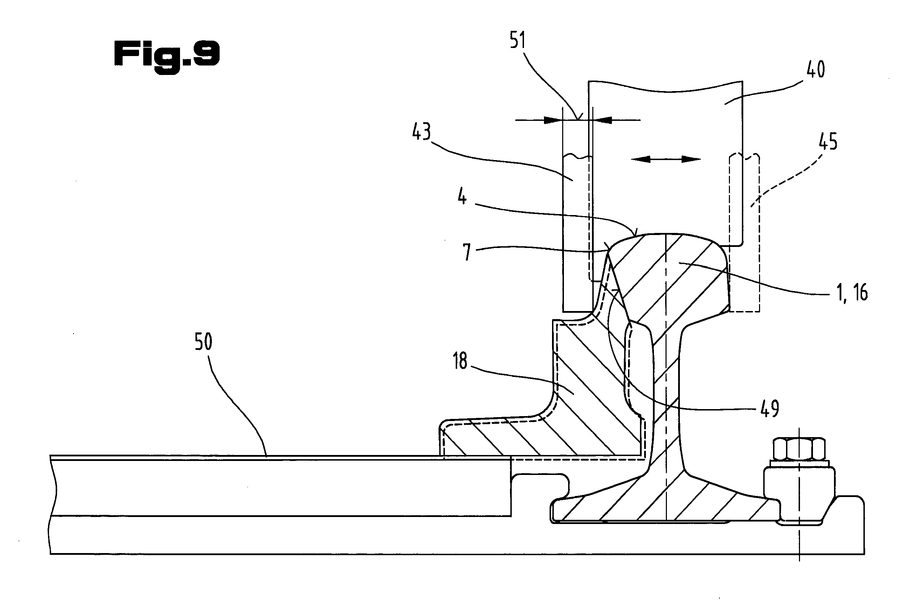

Fig. 9 zeigt im Schnitt gemäß Linie IX - IX in Fig. 4 das Reprofilieren einer Fahrfläche 4 bei einer Abzweigung auf ein Zweiggleis 12 gemäß Fig. 2. Die linke Schiene 2 setzt sich in diesem Bereich aus der linken geraden Backenschiene 16 und der linken gebogenen Zungenschiene 18 zusammen und ist die Weiche 10 so gestellt, dass die linke, gebogene Zungenschiene 18 an der linken geraden Backenschiene 16 anliegt, wodurch das Bearbeitungsfahrzeug 39 von den Spurkränzen der Räder auf das Zweiggleis 12 geführt wird. Die horizontale Positionierung des Bearbeitungswerkzeuges 40 erfolgt dabei mittels eines ersten Kopiertastelementes 43, das an der inneren Seitenfläche 7 der Zungenschiene 18 anliegt.

Beim Reprofilieren des Stammgleises 11, also bei abgerückter Weichenzunge 18, wird die Lauffläche 4 lediglich an der geraden linken Backenschiene 16 reprofiliert, wobei die Zungenausnehmung 49 an der inneren Seitenfläche 7 der Backenschiene 16 die Referenzfläche für das Innenkopieren stört und deshalb wie in strichlierten Linien dargestellt, in diesem Fall ein Wechsel auf das Außenkopieren erfolgt, entweder mittels eines zweiten Kopiertastelements 45 an der äußeren Seitenfläche 8 der Backenschiene 16 oder durch Verstellen des ersten Kopiertastelements 43 an diese Seitenfläche 8.

Vorteilhafterweise wird vor dem Reprofilieren der Weichenzunge 18 bzw. 19 diese etwa auf das Niveau der Fahrfläche 4 der zugehörigen Backenschiene 16, 17 angehoben, wodurch der stärkere Verschleiß der Weichenzunge 18,19 ausgeglichen wird und auch diese mit einem neuen Profil versehen wird.

Das zweite Kopiertastelement 45 befindet sich in Schienenlängsrichtung gesehen vorzugsweise etwa an der gleichen Position wie das erste Kopiertastelement 43, bzw. behält das erste Kopiertastelement 43 bei seiner Verstellung von der inneren Seitenfläche 7 an die äußere Seitenfläche 8 seine Position in Schienenlängsrichtung gesehen bei.

In Fig. 9 ist in Volllinien das angehobene Niveau der Weichenzunge 18 dargestellt, während in strichlierten Linien das ursprüngliche, tiefere Niveau dargestellt ist. Dieses Anheben des Niveaus der Fahrfläche 4 der Weichenzunge 18 kann beispielsweise dadurch erfolgen, dass diese im Zungenbereich 13 mit einer Unterfütterung 50 versehen wird, deren Dicke in Richtung zur Zungenspitze hin zunimmt Die Kopiertastelemente 43, 45 besitzen in horizontaler Richtung quer zur Schiene 2 eine Breite 51, die maximal 35 mm beträgt, wodurch diese schmäler sind als die maximal zulässige Breite oder Dicke der eines Radkranzes und dadurch Kollisionen mit Gleiseinbauten aller Art vermieden sind.

Die Ausführungsbeispiele zeigen mögliche Ausführungsvarianten des erfindungsgemäßen Verfahrens bzw. Bearbeitungsfahrzeuges 34, wobei an dieser Stelle bemerkt sei, dass die, durch die Ansprüche definierte Erfindung nicht auf die speziell dargestellten Ausführungsvarianten derselben eingeschränkt ist.

Der Ordnung halber sei abschließend darauf hingewiesen, dass zum besseren Verständnis des Aufbaus des Bearbeitungsfahrzeuges 34 dieses bzw. dessen Bestandteile teilweise unmaßstäblich und/oder vergrößert und/oder verkleinert dargestellt wurden.

**Bezugszeichenaufstellung**

| | | | |
|---|---|---|---|
| 1 | Schienenkopf | 41 | Antriebsvorrichtung |
| 2 | Schiene | 42 | Verstellanordnung |
| 3 | Schienensteg | 43 | erstes Kopiertastelement |
| 4 | Lauffläche | 44 | Längsmittelebene |
| 5 | Fahrfläche | 45 | zweites Kopiertastelement |
| | | | |
| 6 | Fahrkante | 46 | Fräswerkzeug |
| 7 | innere Seitenfläche | 47 | Schleifwerkzeug |
| 8 | äußere Seitenfläche | 48 | Fahrtrichtung |
| 9 | Gleis | 49 | Zungenausnehmung |
| 10 | Weiche | 50 | Unterfütterung |
| | | | |
| 11 | Stammgleis | 51 | Breite |
| 12 | Zweiggleis | | |
| 13 | Zungenbereich | | |
| 14 | Zwischenschienenbereich | | |
| 15 | Herzstückbereich | | |
| | | | |
| 16 | gerade linke Backenschiene | | |
| 17 | gebogene rechte Backenschiene | | |
| 18 | gebogene linke Zunge | | |
| 19 | gerade rechte Zunge | | |
| 20 | gerade linke Zwischenschiene | | |
| | | | |
| 21 | gebog. linke Zwischenschiene | | |
| 22 | gerade rechte Zwischenschiene | | |
| 23 | gebog. rechte Zwischenschiene | | |
| 24 | gerade linke Radlenkerschiene | | |
| 25 | gebog. rechte Radlenkerschiene | | |
| | | | |
| 26 | Herzstück | | |
| 27 | linke Flügelschiene | | |
| 28 | rechte Flügelschiene | | |
| 29 | Herzstückspitze | | |
| 30 | Gleiskreuzung | | |
| | | | |
| 31 | Zwischenschienenbereich | | |
| 32 | Herzstückbereich | | |
| 33 | doppeltes Herzstück | | |
| 34 | Bearbeitungsfahrzeug | | |
| 35 | Fahrzeugrahmen | | |
| | | | |
| 36 | Radsatz | | |
| 37 | Antriebsmotor | | |
| 38 | Bearbeitungsaggregat | | |
| 39 | Bearbeitungsaggregat | | |
| 40 | Bearbeitungswerkzeug | | |

## Patentansprüche

1. Verfahren zum Profilieren einer zumindest die Fahrkante (6) und die Fahrfläche (5) umfassenden Lauffläche (4) einer im Gleis (9) verlegten Schiene (2), umfassend
- Befahren eines Gleises (9) mit einem Bearbeitungsfahrzeug (34),
- seitliches Antasten der Fahrkante (6) oder der der Gleismitte zugewandten inneren Seitenfläche (7) der zu bearbeitenden Schiene (2) mit einem zumindest in horizontaler Richtung quer zur Schiene (2) verstellbar am Bearbeitungsfahrzeug (34) gelagerten ersten Kopiertastelement (43) und
- Bearbeiten der Fahrkante (6) und/oder der Fahrfläche (5) der Schiene (2) mit einem verstellbaren und zumindest in horizontaler Richtung an das erste Kopiertastelement (43) gekoppelten Bearbeitungsaggregat (39) mit einem rotierend angetriebenen spanabhebenden Bearbeitungswerkzeug (40),
**dadurch gekennzeichnet, dass**
- während der Arbeitsfahrt des Bearbeitungsfahrzeuges (34) im Bereich einer Weiche (10) oder einer Gleiskreuzung (30) in bestimmten Teilabschnitten (13,15,32) des Gleises (9) vorübergehend entweder die äußere Seitenfläche (8) der zu bearbeitenden Schiene (2) oder eine Seitenfläche (7', 8'), insbesondere eine äußere Seitenfläche (8'), der dazu parallelen Schiene (2') des befahrenen Gleises (9) mit einem zweiten Kopiertastelement (45) oder nach Verstellung des ersten Kopiertastelements (43) mit diesem die äußere Seitenfläche (8) angetastet wird
- und in diesen Teilabschnitten (13,15, 32) das Bearbeitungswerkzeug (40) in horizontaler Richtung
- entweder an das zweite Kopiertastelement (45) gekoppelt wird sowie gleichzeitig die Koppelung zwischen erstem Kopiertastelement (43) und Bearbeitungswerkzeug (40) vorübergehend deaktiviert wird
- oder an das verstellte erste Kopiertastelement (43) gekoppelt wird
- wobei Kopiertastelemente (43, 45) mit einer seitlichen Breite (51) von max. 35 mm verwendet werden.

2. Verfahren nach Anspruch 1, **dadurch gekennzeichnet, dass** in bestimmten Teilabschnitten (15), insbesondere im unmittelbaren Bereich eines Herzstückes (26), das Bearbeitungswerkzeug (40) außer Eingriff mit der zu profilierenden Schiene (2) verstellt wird.

3. Verfahren nach Anspruch 1 oder 2, **dadurch gekennzeichnet, dass** zum Bearbeiten eines Backenschienenabschnitts (16, 17) vorübergehend das zweite Kopiertastelement (45) oder das erste Kopiertastelement (43) an die äußere Seitenfläche (8) der zu bearbeitenden Backenschiene (16,17) angetastet wird und an das Bearbeitungswerkzeug (40) gekoppelt wird.

4. Verfahren nach Anspruch 1 oder 2, **dadurch gekennzeichnet, dass** zum Bearbeiten eines Backenschienenabschnitts (16, 17) vorübergehend das zweite Kopiertastelement (45) an die äußere Seitenfläche (8') der dazu parallelen Schiene (2') angetastet wird und an das Bearbeitungswerkzeug (40) gekoppelt ist, wobei zwischen zweitem Kopiertastelement (45) und Bearbeitungswerkzeug (40) eine Positionskorrektur in horizontaler Richtung erfolgen kann.

5. Verfahren nach einem der vorhergehenden Ansprüche, **dadurch gekennzeichnet, dass** beim Bearbeiten eines Herzstückbereiches (15) im unmittelbaren Bereich des Herzstückes (26) vorübergehend das zweite Kopiertastelement (45) an die äußere Seitenfläche (8') der dazu parallelen Schiene (2') angetastet wird und an das Bearbeitungswerkzeug (40) gekoppelt wird und das Bearbeitungswerkzeug (40) sowie das erste Kopiertastelement (43) au-Ber kontaktierendem Eingriff mit der Schiene (2) gebracht wird.

6. Verfahren nach einem der vorhergehenden Ansprüche, **dadurch gekennzeichnet, dass** eine befahrene und zu bearbeitende Weichenzunge (18, 19) vor der Bearbeitung an die Backenschiene (16, 17) angelegt wird und die Fahrfläche (4) der Weichenzunge (18, 19) etwa auf das Niveau der Fahrfläche (4) der Backenschiene (16, 17), insbesondere mittels einer Unverfütterung (50), angehoben wird.

7. Verfahren nach einem der vorhergehenden Ansprüche, **dadurch gekennzeichnet, dass** das Profilieren einen Fräsvorgang, insbesondere ein Umfangsfräsen umfasst.

8. Verfahren nach einem der vorhergehenden Ansprüche, **dadurch gekennzeichnet, dass** das Profilieren im selben Arbeitsdurchgang einen Schleifvorgang, insbesondere ein Umfangsschleifen umfasst.

9. Schienengeführtes Bearbeitungsfahrzeug (34) zum Profilieren einer zumindest die Fahrkante (6) und die Fahrfläche (5) umfassenden Lauffläche (4) einer in einem Gleis verlegten Schiene (2), umfassend einen Fahrzeugrahmen (35), ein zumindest in horizontaler Richtung quer zur Schiene (2) relativ zum Fahrzeugrahmen (35) verstellbar gelagertes und mit der Schiene (2) in Kontakt bringbares erstes Kopiertastelement (43) zum seitlichen Antasten einer Fahrkante (6) an der inneren Seitenfläche (7) der zu bearbeitenden Schiene (2), zumindest ein am Fahrzeugrahmen (35) angeordnetes Bearbeitungsaggregat (39) mit einem spanabhebenden Bearbeitungswerkzeug (40), eine das Bearbeitungswerkzeug (40) rotierend antreibende Antriebsvorrichtung (41), eine Verstellanordnung (42) zum Verstellen des Bearbeitungswerkzeugs (40) oder des Bearbeitungsaggregats (39) relativ zum Fahrzeugrahmen (35), wobei das Bearbeitungswerkzeug (40) zumindest in horizontaler Richtung an das erste Kopiertastelement (43) koppelbar ist, wobei ein zweites Kopiertastelement (45, 45') ausgebildet ist, das an die äußere Seitenfläche (8) der zu bearbeitenden Schiene (2) und/oder eine Seitenfläche (7' 8'), insbesondere eine Außenseite (8'), der dazu parallelen Schiene (2') verstellbar ist und an das Bearbeitungswerkzeug (40) koppelbar ist oder dass das erste Kopiertastelement (43) bis an die äußere Seitenfläche (8) der zu bearbeitenden Schiene (2) verstellbar ist, **dadurch gekennzeichnet, dass** die Kopiertastelemente (43, 45) eine seitliche Breite (51) von max. 35 mm aufweisen, wodurch während einer Arbeitsfahrt ein Profilieren im Bereich einer Weiche (10) oder einer Gleiskreuzung (30) durchführbar ist.

10. Bearbeitungsfahrzeug (34) nach Anspruch 9, **dadurch gekennzeichnet, dass** die Kopiertastelemente (43, 45) in eine Distanz zur Schiene (2) von zumindest 100 mm, vorzugsweise in vertikaler Richtung verstellbar sind.

11. Bearbeitungsfahrzeug (34) nach Anspruch 9 oder 10, **dadurch gekennzeichnet, dass** zumindest ein Bearbeitungswerkzeug (40) durch ein Fräswerkzeug (46), insbesondere einen Umfangsfräser gebildet ist.

12. Bearbeitungsfahrzeug (34) nach einem der Ansprüche 9 bis 11, **dadurch gekennzeichnet, dass** zumindest ein Bearbeitungswerkzeug (40) durch ein Schleifwerkzeug (47), insbesondere eine Umfangsschleifscheibe gebildet ist.

13. Bearbeitungsfahrzeug (34) nach einem der Ansprüche 9 bis 12, **dadurch gekennzeichnet, dass** in Fahrtrichtung hintereinander zumindest zwei Bearbeitungsaggregate (38, 39) mit jeweils zugeordneten ersten und zweiten Kopiertastelementen (43, 45) angeordnet sind, wobei das vordere Bearbeitungsaggregat (38) ein Fräswerkzeug (46) umfasst und das hintere Bearbeitungsaggregat (39) ein Schleifwerkzeug (47) umfasst.

14. Bearbeitungsfahrzeug (34) nach Anspruch 13, **dadurch gekennzeichnet, dass** ein Bearbeitungsaggregat (38, 39) ein Bearbeitungswerkzeug in Form einer Fächerschleifscheibe umfasst.

15. Bearbeitungsfahrzeug (34) nach einem der Ansprüche 9 bis 14, **dadurch gekennzeichnet, dass** die Bearbeitungswerkzeuge (40) beidseits einer vertikalen Längsmittelebene (44) des Bearbeitungsfahrzeuges (34) angeordnet sind und gleichzeitig in Eingriff mit beiden Schienen (2, 2') eines Gleisstranges bringbar sind.

16. Bearbeitungsfahrzeug (34) nach einem der Ansprüche 9 bis 15, **dadurch gekennzeichnet, dass** die Bearbeitungsaggregate (38, 39) mittels CNC-gesteuerten Achsen verstellbar sind.

17. Bearbeitungsfahrzeug (34) nach einem der Ansprüche 9 bis 16, **dadurch gekennzeichnet, dass** das Bearbeitungsfahrzeug (34) einen Fahrantrieb (37) umfasst.

18. Verwendung des Verfahrens nach einem der Ansprüche 1 bis 8 und/oder eines Bearbeitungsfahrzeuges (34) nach einem der Ansprüche 9 bis 17 zum Profilieren von verlegten Schienen (2, 2') innerhalb einer Weiche (10) oder einer Gleiskreuzung (30), insbesondere von Schienenabschnitten ausgewählt aus einer Gruppe umfassend Backenschienen (16, 17), Weichenzungen (18,19), Zwischenschienen (20, 21, 22, 23), Anschlussschienen und durchlaufenden Radlenkerschienen.

## Claims

1. Method of profiling a running surface (4) comprising at least the running edge (6) and the driving surface (5) of a rail (2) laid in a track (9), comprising
- driving on a track (9) with a processing vehicle (34),
- laterally moving into contact with the running edge (6) or the inner side face (7) of the rail (2) to be machined facing the track center with at least a first copying probe element (43) mounted on the processing vehicle (34) and displaceable in the horizontal direction transversely to the rail (2) and
- machining the running edge (6) and/or the driving surface (5) of the rail (2) with a machining unit (39) having a machining tool (40) driven in rotation for removing material which is displaceable and coupled with the first copying probe element (43) at least in the horizontal direction,
**characterized in that**
- during the working trip of the processing vehicle (34) in specific part-sections (13, 15, 32) of the track (9), either a second copying probe element (45) is temporarily placed in contact with the outer side face (8) of the rail (2) to be machined or a side face (7', 8'), in particular an outer side face (8'), of the rail (2') of the driven-over track (9) parallel therewith, or after displacing the first copying probe element (43) it is placed in contact with the outer side face (8),
- and in these part-sections (13, 15, 32), the machining tool (40) is, in the horizontal direction
- either coupled with the second copying probe element (45) and the coupling between the first copying probe element (43) and machining tool (40) is simultaneously temporarily deactivated,
- or coupled with the displaced first copying probe element (43)
- and copying probe elements (43, 45) having a lateral width (51) of at most 35 mm being used.

2. Method according to claim 1, **characterized in that** in specific part-sections (15), in particular in the immediate vicinity of a frog (26), the machining tool (40) is moved out of engagement with the rail (2) to be profiled.

3. Method according to claim 1 or 2, **characterized in that** in order to machine a stock rail section (16, 17) the second copying probe element (45) or the first copying probe element (43) is temporarily placed in contact with the outer side face (8) of the stock rail (16, 17) to be machined and coupled with the machining tool (40).

4. Method according to claim 1 or 2, **characterized in that** in order to machine a stock rail section (16, 17), the second copying probe element (45) is temporarily placed in contact with the outer side face (8') of the rail (2') parallel therewith and coupled with the machining tool (40), and a position correction can be made in the horizontal direction between the second copying probe element (45) and machining tool (40).

5. Method according to one of the preceding claims, **characterized in that** in order to machine a frog region (15) in the immediate vicinity of the frog (26), the second copying probe element (45) is temporarily placed in contact with the outer side face (8') of the rail (2') parallel therewith and coupled with the machining tool (40), and the machining tool (40) as well as the first copying probe element (43) are moved out of contacting engagement with the rail (2).

6. Method according to one of the preceding claims, **characterized in that** a point blade (18, 19) which is driven over and has to be machined is placed in contact with the stock rail (16, 17) and the driving surface (4) of the point blade (18, 19) is raised more or less to the level of the driving surface (4) of the stock rail (16, 17), in particular by means of a bed (50), prior to machining.

7. Method according to one of the preceding claims, **characterized in that** the profiling comprises a milling operation, in particular peripheral milling.

8. Method according to one of the preceding claims, **characterized in that** the profiling comprises a milling operation, in particular peripheral milling.

9. Rail-guided processing vehicle (34) for profiling a running surface (4) comprising at least the running edge (6) and the driving surface (5) of a rail (2) laid in a track, comprising a vehicle frame (35), a first copying probe element (43) mounted so as to be displaceable relative to the vehicle frame (35) at least in the horizontal direction transversely to the rail (2) and placed in contact with the rail (2) for laterally contacting a running edge (6) on the inner side face (7) of the rail (2) to be machined, at least one machining unit (39) disposed on the vehicle frame (35) having a machining tool (40) for removing material, a drive device (41) driving the machining tool (40) in rotation, a displacement arrangement (42) for displacing the machining tool (40) or the machining unit (39) relative to the vehicle frame (35), and the machining tool (40) can be coupled with the first copying probe element (43) at least in the horizontal direction, wherein a second copying probe element (45, 45') is provided which can be displaced on to the outer side face (8) of the rail (2) to be machined and/or a side face (7', 8'), in particular an outer side (8'), of the rail (2') parallel therewith and can be coupled with the machining tool (40), or the first copying probe element (43) can be displaced as far as the outer side face (8) of the rail (2) to be machined, **characterized in that** the copying probe elements (43, 45) have a lateral width (51) of at most 35 mm, whereby a re-profiling in the region of a switch (10) or a track crossing (30) can be carried out during one work trip.

10. Processing vehicle (34) according to claim 9, charaterized in that the copying probe elements (43, 45) can be displaced into a distance from the rail (2) of at least 100 mm, preferably in the vertical direction.

11. Processing vehicle (34) according to claim 9 or 10, **characterized in that** at least one machining tool (40) is provided in the form of a milling tool (46), in particular a peripheral mill cutter.

12. Processing vehicle (34) according to one of claims 9 to 11, **characterized in that** at least one machining tool (40) is provided in the form of a grinding tool (47), in particular a peripheral grinder.

13. Processing vehicle (34) according to one of claims 9 to 12, **characterized in that** at least two machining units (38, 39) are disposed one after the other in the direction of travel, each being assigned first and second copying probe elements (43, 45), and the front machining unit (38) has a milling tool (46) and the rear machining unit (39) has a grinding tool (47).

14. Processing vehicle (34) according to claim 13, **characterized in that** one machining unit (38, 39) has a machining tool in the form of a flap disk.

15. Processing vehicle (34) according to one of claims 9 to 14, **characterized in that** the machining tools (40) are disposed on either side of a vertical longitudinal mid-plane (44) of the processing vehicle (34) and can be placed in engagement with both rails (2, 2') of a rail track simultaneously.

16. Processing vehicle (34) according to one of claims 9 to 15, **characterized in that** the machining units (38, 39) can be displaced by means of CNC-controlled shafts.

17. Processing vehicle (34) according to one of claims 9 to 16, **characterized in that** the processing vehicle (34) has a drive motor (37).

18. Use of the method according to one of claims 1 to 8 and/or a processing vehicle (34) according to one of claims 9 to 17 for profiling rails (2, 2') laid within a switch (10) or a track crossing (30), in particular rail sections selected from a group comprising stock rails (16, 17), point blades (18, 19), crossover rails (20, 21, 22, 23), closure rails und continuously extending check rails.

## Revendications

1. Procédé pour le profilage d'une surface de roulement (4) d'un rail (2) posé sur la voie (9), comprenant au moins l'arête de roulement (6) et la bande de roulement (5) comprenant :
- le balayage latéral de l'arête de roulement (6) ou de la surface latérale interne (7), orientée vers le centre de la voie, du rail à usiner (2) avec un premier élément de balayage à copiage (43) logé au moins en direction horizontale transversalement par rapport au rail (2), de manière réglable sur le véhicule d'usinage (34) et
- usinage de l'arête de roulement (6) et/ou de la bande de roulement (5) du rail (2) avec un agrégat d'usinage (39) réglable et couplé au moins ne direction horizontale au premier élément de balayage à copiage (43), avec un outil d'usinage (40) rotatif à enlèvement de copeaux,
**caractérisé en ce que**
- pendant la marche de travail du véhicule d'usinage (34) la surface latérale externe (8) est balayée, au niveau d'un aiguillage (10) ou d'un croisement de rails (30), dans des portions (13, 15, 32) déterminées de la voie (9), provisoirement soit la surface latérale externe (8) du rail à usiner (2) soit une surface latérale (7', 8'), plus particulièrement une surface latérale externe (8'), du rail parallèle (2') de la voie (9) parcourue, avec un deuxième élément de balayage à copiage (45) ou, après le réglage du premier élément de balayage à copiage (43), avec celui-ci
- et dans ces portions (13, 15, 23), l'outil d'usinage (40), dans la direction horizontale,
- est couplé soit au deuxième élément de balayage à copiage (45) et en même temps le couplage entre le premier élément de balayage à copiage (43) et l'outil d'usinage (40) est provisoirement désactivé
- soit au premier élément de balayage à copiage (43)
- des éléments de balayage à copiage (43, 45) avec une largeur latérale (51) de 35 mm max. étant utilisés.

2. Procédé selon la revendication 1, **caractérisé en ce que**, sur certaines portions (15), plus particulièrement à proximité immédiate d'une pièce centrale (26), l'outil d'usinage (40) est déboîté du rail (2) à profiler.

3. Procédé selon la revendication 1 ou 2, **caractérisé en ce que**, pour l'usinage d'une portion à contre-aiguille (16, 17), le deuxième élément de balayage à copiage (45) ou le premier élément de balayage à copiage (43) est utilisé provisoirement sur la surface latérale externe (8) de la contre-aiguille (16, 17) et couplé provisoirement à l'outil d'usinage (40).

4. Procédé selon la revendication 1 ou 2, **caractérisé en ce que**, pour l'usinage d'une portion à contre-aiguille (16, 17), le deuxième élément de balayage à copiage (45) est utilisé provisoirement sur la surface latérale externe (8') du rail parallèle (2') et est couplé provisoirement à l'outil d'usinage (40), une correction de position pouvant être effectuée dans la direction horizontale entre le deuxième élément de balayage à copiage (45) et l'outil d'usinage (40).

5. Procédé selon l'une des revendications précédentes, **caractérisé en ce que**, lors de l'usinage d'une zone centrale (15) à proximité immédiate de la pièce centrale (26), le deuxième élément de balayage à copiage (45) est utilisé provisoirement sur la surface latérale externe (8') du rail parallèle (2') et est couplé provisoirement à l'outil d'usinage (40), et l'outil d'usinage (40) ainsi que le premier élément de balayage à copiage (43) sont déboîtés du rail (2).

6. Procédé selon l'une des revendications précédentes, **caractérisé en ce qu'**une lame d'aiguillage (18, 19) parcourue et à usiner est posée, avant l'usinage sur la contre-aiguille (16, 17) et la surface de roulement (4) de la lame d'aiguillage (18, 19) est soulevée à peu près au niveau de la surface de roulement (4) de la contre-aiguille (16, 17), plus particulièrement à l'aide d'une garniture inférieure (50).

7. Procédé selon l'une des revendications précédentes, **caractérisé en ce que** le profilage comprend un processus de fraisage, plus particulièrement un fraisage circulaire.

8. Procédé selon l'une des revendications précédentes, **caractérisé en ce que** le profilage comprend, dans la même passe, un processus de rectification, plus particulièrement une rectification circulaire.

9. Véhicule d'usinage (34) sur rail pour le profilage d'une surface de roulement (4), comprenant l'arête de roulement (6) et la bande de roulement (5), d'un rail (2) posé dans une voie, comprenant un châssis de véhicule (35), un premier élément de balayage à copiage (43) logé de manière réglable, au moins en direction horizontale transversalement au rail (2), par rapport au châssis de véhicule (35) et avec pouvant être mis en contact avec le rail (2), pour le balayage latéral d'une arête de roulement (6) sur la surface latérale interne (7) du rail (2) à usiner, au moins un agrégat d'usinage (39) disposé sur le châssis de véhicule (35), avec un outil d'usinage (40) à enlèvement de copeaux, un dispositif d'entraînement (41) entraînant l'outil d'usinage (40) en rotation, un dispositif de réglage (42) pour le réglage de l'outil d'usinage (40) ou de l'agrégat d'usinage (39) par rapport au châssis de véhicule (35), l'outil d'usinage (40) pouvant être couplé au moins en direction horizontale au premier élément de balayage à copiage (43), un deuxième élément de balayage à copiage (45, 45') étant prévu, qui est réglable sur la surface latérale externe (8) du rail (2) à usiner et/ou une surface latérale (7', 8'), plus particulièrement un côté extérieur (8'), du rail (2') à usiner et qui peut être couplée à l'outil d'usinage (40) ou en ce que le premier élément de balayage à copiage (43) est réglable jusqu'à la surface latérale externe (8) du rail (2) à usiner, **caractérisé en ce que** les éléments de balayage à copiage (43, 45) présentent une largeur latérale (51) de 35 mm max., un profilage pouvant être effectué pendant une marche de travail au niveau d'un aiguillage (10) ou d'un croisement de rail (30).

10. Véhicule d'usinage (34) selon la revendication 9, **caractérisé en ce que** les éléments de balayage à copiage (43, 45) sont réglables sur une distance d'au moins 100 mm par rapport au rail (2), de préférence en direction verticale.

11. Véhicule d'usinage (34) selon la revendication 9 ou 10, **caractérisé en ce qu'**au moins un outil d'usinage (40) est constitué d'un outil de fraisage (46), plus particulièrement d'une fraise circulaire.

12. Véhicule d'usinage (34) selon la revendication 9 à 11, **caractérisé en ce qu'**au moins un outil d'usinage (40) est constitué d'un outil de rectification (47), plus particulièrement d'une meule de rectification circulaire.

13. Véhicule d'usinage (34) selon la revendication 9 à 12, **caractérisé en ce que**, dans la direction de marche, au moins deux agrégats d'usinage (38, 39) sont disposés l'un derrière l'autre avec respectivement un premier et un deuxième élément de balayage à copiage (43, 45), l'agrégat d'usinage avant (38) comprenant un outil de fraisage (46) et l'agrégat d'usinage arrière (39) comprenant un outil de rectification (47).

14. Véhicule d'usinage (34) selon la revendication 13, **caractérisé en ce qu'**un agrégat d'usinage (38, 39) comprend un outil d'usinage sous la forme d'une meule de rectification à lamelles.

15. Véhicule d'usinage (34) selon l'une des revendications 9 à 14, **caractérisé en ce que** les outils d'usinage (40) sont disposés des deux côtés d'un plan central longitudinal (44) du véhicule d'usinage (34) et peuvent être en même emboîtés avec les deux rails (2, 2') d'une voie.

16. Véhicule d'usinage (34) selon l'une des revendications 9 à 15, **caractérisé en ce que** les agrégats d'usinage (38, 39) sont réglables à l'aide d'axes contrôlés par CNC.

17. Véhicule d'usinage (34) selon l'une des revendications 9 à 16, **caractérisé en ce que** le véhicule d'usinage (34) comprend un entraînement (37).

18. Utilisation du procédé selon l'une des revendications 1 à 8 et/ou d'un véhicule d'usinage (34) selon l'une des revendications 9 à 17 pour le profilage de rails (2, 2') posés à l'intérieur d'un aiguillage (10) ou d'un croisement de rail (30), plus particulièrement de portions de rails, choisis par un groupe comprenant des contre-aiguilles (16, 17), des lames d'aiguillages (18, 19), des rails intermédiaires (20, 21, 22, 23), des rails de connexion et des contre-rails.
